# EUROPEAN PATENT APPLICATION

(11) **EP 4 851 976 A1**
(43) Date of publication of application: **09.12.2026**
(21) Application number: 25181377.0
(22) Date of filing: 06.06.2025
(51) Int. Cl.: G09B 19/00, G06N 10/80

(54) **SYSTEM AND METHOD FOR MANAGING A QUANTUM TECHNOLOGY TRAINING SYSTEM**

(71) Applicant: University of Tartu, 50090 Tartu (EE)
(72) Inventor: Theis, Dirk Oliver, 50090 Tartu (EE)
(74) Representative: Sonnenberg Harrison Partnerschaft mbB

(57) **Abstract**

A computer-implemented system (10) and a method (300) for managing an educational system (60) is described. The system comprising a central server (20), wherein the central server (20) has a hardware layer (30) with a central processor (32), central user-input hardware (34) configured to receive educator inputs (45) from an educator (40), central communication hardware (36) configured to receive user device status messages (110) and to transmit user device action messages (120) to a plurality of user interactions devices (100), and a mass media memory (38) configured to store data and processing instructions.

## Description

### CROSS-REFERENCE TO RELATED APPLICATIONS

None

### FIELD OF THE INVENTION

The field of the invention relates to a computer-implemented system and method for managing a quantum technology training system.

### BACKGROUND OF THE INVENTION

Training about technologies, such as quantum technology, to high school students presents several challenges that educators must navigate to communicate such complex subjects. Quantum mechanics, for example, introduces ideas that often defy classical intuition, such as the abstract concepts of "superposition" and "entanglement". The high school students will be more accustomed to deterministic and tangible phenomena and may find such abstract concepts difficult to grasp.

There is a scarcity of textbooks and teaching materials tailored for high school students to train them on quantum technology. Educators have needed to develop custom resources or adapt higher-level materials for their students. This demands additional time and expertise. It will be appreciated that many high school physics teachers may also not have a background in quantum mechanics, making it challenging for those teachers to teach the subject confidently.

Addressing and correcting these issues requires careful instructional design and the use of effective educational aids, such as the development of educational aids to enable emulations, simulations and thought experiments.

One education toy or teaching aid for enabling the teaching of quantum technology is known from Chinese utility model no CN202023134695U which discloses a quantum entanglement teaching demonstration teaching aid. Another educational aid is to be found in US 11,574,560 which discloses a quantum state visualization device comprising at least a portion of a spherical shell and a support structure affixed to the spherical shell. A portion of the support structure can intersect a centre of the spherical shell. The quantum state visualization device further comprising an indicator pivotally attached to the support structure at the portion of the support structure intersecting the centre of the spherical shell. The indicator is representative of a quantum state based on its position relative to the spherical shell.

Whilst these prior art devices are useful, there remains a need to improve educational materials to train a new generation of physicists.

### BRIEF SUMMARY OF THE INVENTION

An improved computer-implemented system for managing a training system is disclosed in this document. The system comprises a central server, wherein the central server has a hardware layer with a central processor, central user-input hardware configured to receive educator inputs from an educator, central communication hardware configured to receive qubit device transmit messages and to transmit qubit device receive messages to a plurality of user interactions devices, and a mass media memory configured to store data and processing instructions. The system further comprises an application program layer running the training system and an operating system layer configured to receive the educator inputs, and the qubit device transmit messages. The application program layer passes ones of the received educator inputs and the received qubit device transmit messages to the training system.

The training system enables the educator to design and run education programs to teach students about quantum information and quantum information processing.

In one aspect, the system further comprises a plurality of user interaction devices comprising qubit receptacles for receiving a qubit device, and one or more identification units for identifying the qubit device in the qubit receptacles. The qubit device is, for example, spherically shaped and represents a physical or logical qubit. The qubit device can be held and moved by students and thus more easily perceived by the students. The qubit devices are robust and contain no electronics, except for an identification device to allow the qubit devices to be identified when the qubit devices are connected with one of the user interaction devices.

The user interaction devices comprise a communication unit configured to transmit qubit device transmit messages to the central server and to receive qubit device receive messages from the central server. The user interaction devices comprise further at least one of user display elements or user input elements. In one aspect, the user display elements display a value calculated by a quantum emulation running in the central server.

In one aspect, the mass medium stores details of relationships between ones of the qubit devices.

A method for managing a training system is also disclosed. The method comprises inserting at least one qubit device into a qubit receptacle of one of a plurality of user interaction devices, identifying the qubit device, transmitting the identity of the qubit device to a central server and a query indicative of an action taken on one or more of the qubit devices, performing a quantum emulation, sending results of the quantum emulation to the user interaction device, and displaying an observable of the inserted at least one qubit device calculated by the quantum emulation.

The value of the observable is calculated by a quantum state calculation program running in an embedded application program in the central server.

The actions include a measurement of an observable, an entanglement of one or more of the at least one qubit device, a bit flip of one or more of the at least one qubit, or a phase flip of one or more of the at least one qubit device. These actions are not limiting of the invention.

The system and the method are used for educating quantum information technologies.

A computer program product stored on a non-volatile storage medium for use on a central processor for implementing the method is also disclosed.

### DESCRIPTION OF THE FIGURES

Fig. 1 shows an overview of the computer-implemented system for managing a training system.
Figs. 2A-2E shows example of devices for use in the training system.
Fig. 3 shows a flow diagram with measurement of the qubit devices.
Fig. 4 shows a flow diagram with entanglement of the qubit devices.
Fig. 5 shows stabilizer representation of the global quantum state in the form of a matrix and the steps of an experimentation.

### DETAILED DESCRIPTION OF THE INVENTION

The invention will now be described on the basis of the drawings. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

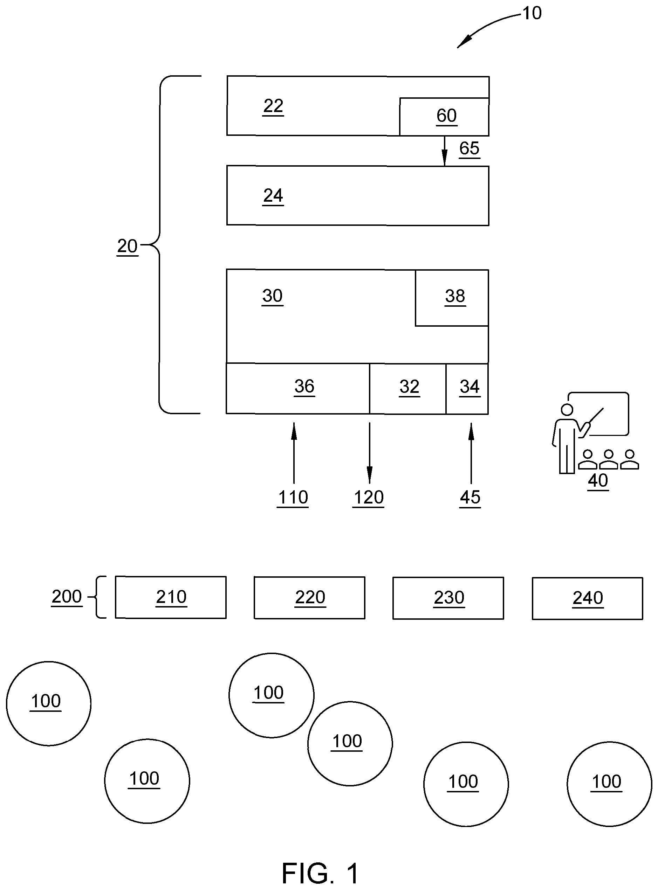

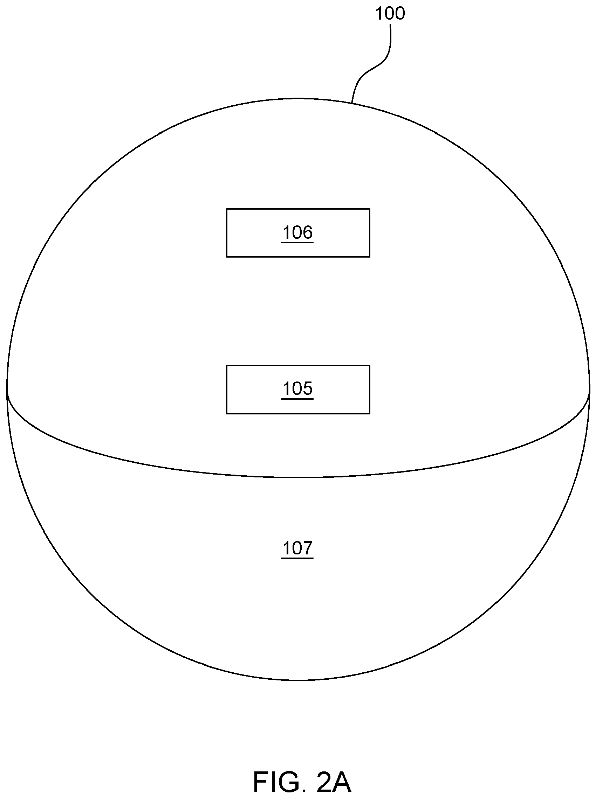

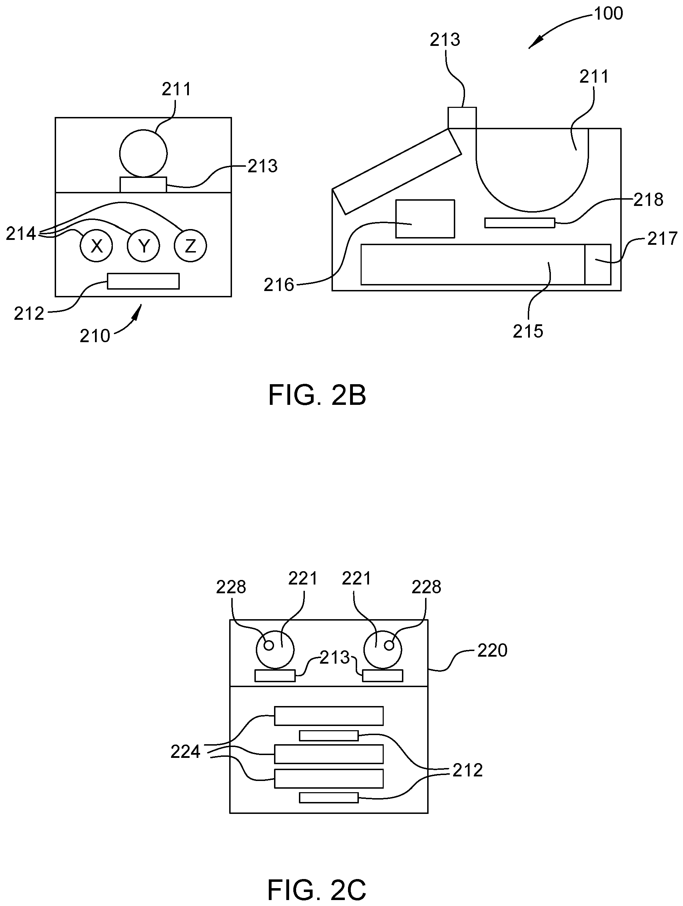

Fig. 1 shows an example of a computer-implemented system 10 which is used for managing a training system 60, as set out in this document. The system 10 comprises a central server 20, a plurality of qubit devices 100 (shown in Fig. 2A), and a plurality of user interaction devices 200 (shown in Figs. 2B to 2E).

The central server 20 has a hardware layer 30, an application program layer 22 and an operating system layer 24. The hardware layer 30 is provided with a central processor 32, central communication hardware 36, central user-input hardware 34, and a mass media memory 38. The hardware layer 30 may include other elements as well, but these will not be described in detail. The application program layer 22 runs programs, such as the afore-mentioned quantum training system 60 which is implemented as a computer program to perform an emulation of a quantum system, as will be described later.

The central communications hardware 36 is configured to receive educator inputs 45 from an educator 40 through the central user-input hardware 34 as well as communicate with the plurality of user interaction devices 200. The educator 40 may be a teacher or a lecturer who is teaching a group of users, such as high school students, or members of the public, about a subject in quantum computing or quantum communication and wants to use the training system 60 to work with the qubit devices 100 and the user interaction devices 200. The educator may use, to generate the educator inputs, input devices, such as a keyboard or mouse, or may have an app installed on a smartphone or a tablet, and this is not limiting of the invention.

The qubit devices 100 are shown in Fig. 2A and are ball-shaped in this example but could have any form. The qubit devices 100 represent physical or logical quantum bits and will be considered to have an observable result or value on measurement. The observable result or value is generated in the central server 60, as explained below. The qubit devices 100 also have a unique ID stored in them that can be read out by the user interaction devices 200, as described later, and this unique ID will be communicated to the central server 60 to enable the central server 60 to associate the generated result with the one of the qubit devices 100. In one aspect, the unique ID is implemented as a subset of ISO 14443A (proximity cards → NFC). The unique ID is fixed and hard-wired into an RFID tag 105 by the manufacturer of the RFID tag 105 which would then be built into the qubit device 100. An alternative would be an optical encoding of the unique ID, e.g., in the form of a barcode or QR-code 106. A combination of the two methods might improve reliability and battery life and would also be possible. The qubit devices 100 may be at least partially coloured with a colour 107.

In order for students and teachers not to confuse the qubit devices 100, the qubit devices 100 can have tags, numbers, labels, or label fields where students can write with pens or markers. Another way to tag a qubit device 100 is to distinguish different qubit device by different colours. In terms of the qubit represented by the qubit device, it will be appreciated that the colour, e.g., "red" should not be considered to be a physical property, it is just a tag, similar to "17", "Alice's qubit", or "foo".

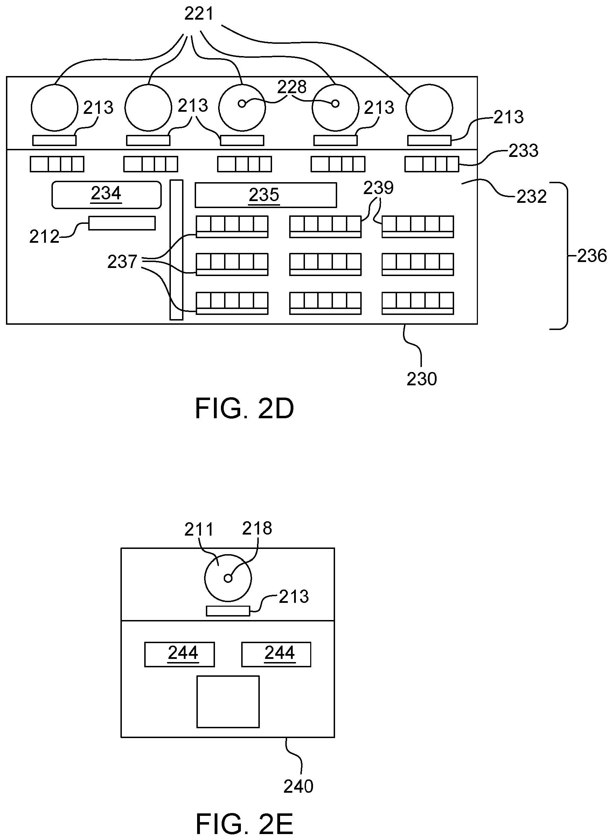

There are four different types of user interaction devices 200 which are shown in Figs. 2B to 2E. These are a qubit measurement device 210 (Fig. 2B), a qubit entanglement device 220 (Fig. 2C), a multi-qubit measurement device 230 (Fig. 2D) and a flip device 240 (Fig. 2E). It will be appreciated that not all of the user interaction devices 200 need to be present in the quantum training system 60 and that other user interaction devices could be conceived.

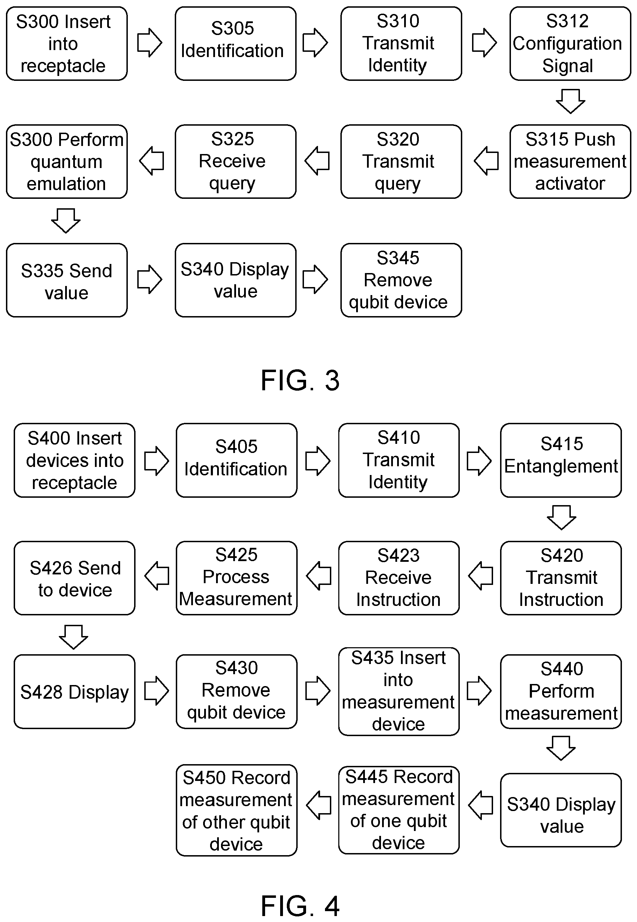

The qubit measurement device 210 is shown in more detail in Fig. 2B and can be used to initiate modelling of a measurement of the observable value of the qubit represented by one of the qubit devices 100, as will be explained below. The left-hand figure in Fig. 2B shows a front view of the measurement device 210 and the right-hand figure in Fig. 2B shows a side view of the measurement device 210 highlighting the internal elements of the measurement device 210. The measurement device 210 is essentially a container with a qubit receptacle 211 with a shape that can accommodate one of the qubit devices 100. The measurement device 210 further has a qubit readiness indicator 213 indicating whether the measurement device 210 is ready to initiate the calculation of the observable value of the qubit, represented by the qubit device 100 placed in the qubit receptacle 211. This qubit readiness indicator 213 could be implemented in the form, for example, of an LED, or the qubit readiness indicator 213 could be implemented using a signal on a response display 212. The measurement device 210 further has a plurality of measurement activators 214, implemented for example as for example three buttons labelled "Measure X Observable", "Measure Y Observable" and "Measure Z Observable". These measurement activators 214 are simply labelled "X", "Y" and "Z" in the figure for simplicity. The measurement activators 214 may be pressed by the user to activate the corresponding measurement process, as set out in Fig. 3, of the Pauli X, Y, or Z observables, respectively, of the qubit represented by the qubit device 100 inserted into the qubit receptacle 211. The response display 212 is, in the form, for example, of an LCD or LED display displaying the result value of the measurement to the user and as noted above, the qubit readiness indicator 213 may be implemented by displaying a message on this response display 212, e.g., "qubit ready".

The qubit measurement device 210 comprises further a digital processing unit 215, a communication unit 216, a (replaceable or rechargeable) battery 217 or other power supply unit, and an identification unit 218. The digital processing unit 215 controls the operation of the qubit measurement unit 210 and is an embedded system. The digital processing unit 215 can be a microcontroller on a PCB, such as but not limited to a ATmega328 microcontroller. The digital processing unit 215 will typically contain some volatile (e.g., SRAM) or some persistent (e.g., EEPROM) memory, but that is not limiting to the invention. The communication unit 216 communicates with the central communications hardware 36 of the central server 20, for example using a Wi-Fi protocol, but this is not limiting of the invention. The communication unit 216 could be placed on the same PCB, or a microcontroller with included communication unit could be used, e.g., an ESP32 communication unit.

The identification unit 218 obtains the identity of the qubit device 100 placed in the qubit receptacle 211. The identification unit 218 could be implemented using active-reader passive-tag radio-frequency identification technology, whereby a reader in the identification unit 218 supplies power to enable bidirectional communication. Initialisation and anti-collision features to uniquely address the qubit device 100 in the qubit receptacle 211 of the qubit measurement device 200 must be taken care of, and a protocol ensuring secure, reliable data exchange must be implemented. Standard off-the-shelf components implementing parts 2-4 of the ISO 14443A standard for proximity cards could be used. In this case, the qubit device 100 would be equipped with the corresponding tag and an antenna. The qubit device 100 and/or the identification unit 218 or both could have several antennae, for example incorporated into the RFID tag 105, instead of a single one each to avoid problems due to badly aligned antennae.

Alternatively, optical identification of the qubit device 100 by the identification unit 218 could be implemented whereby the identification unit 218 comprises a light emitter and optical sensor components to scan the surface of the qubit device 100, which in this case would have unique, optically recognizable characteristics. A simple example would be the identification unit 218 comprising a scanner and the qubit device 100 has a barcode or QR code 106 printed on the surface of the qubit device 100 and which can be scanned.

RF and optical methods can also be combined. As an example, an optical sensor could provide only the information whether a qubit device 100 is present in the qubit receptacle 211, while an ARPT NFC could make the actual identification. This might have the advantage that an RF-reader module in the identification unit 218 only requires power once and does not have to check for the presence of a qubit device 100 continuously.

The walls of the qubit receptacle 211 could be lined with an RF-absorbing material, e.g., a ferrite sheet, to help protect against crosstalk caused by placing a qubit device 100 outside of the qubit receptacle 211 of a user interaction device 210.

Fig. 2C shows an example of the qubit entanglement device 220 with two qubit receptacles 221, each having an identification unit 228, and a qubit readiness indicator 213. Fig. 2C only shows the top view of the qubit entanglement device 220. It will be appreciated that the qubit entanglement device 220 will also have a digital processing unit 215, a communication unit 216, and a battery 217 inside the qubit entanglement device 220, but these elements are not shown in detail here for simplicity. The identification units 228 identify the qubit device 100 inserted into the corresponding one of the qubit receptacles 221, similar to the identification units 218 described in connection with Fig. 2B. The identification units 228 and the qubit receptacles 221 could be tailored to enhance correct identification of the qubit devices 100 inserted in a plurality of receptacles 221 that are in spatial proximity to each other, by reducing collision, crosstalk, or coupling of antennae. One example of a tailored design of a collection of receptacles 221 comprises placing walls comprising RF-absorbing material (e.g., ferrite sheets) between the receptacles 221. Alternatively, the walls of the receptacles 221 themselves could comprise such material, as described above for the qubit receptacles 211 of the qubit measurement device 210.

The qubit entanglement device 220 comprises a plurality of measurement activators 224, for example in the form of buttons, e.g., three, labelled "Measure XX Observable", "Measure YY Observable", "Measure ZZ Observable" respectively. The three measurement activators 224 activate the measurement process, as described in Fig. 3. The qubit entanglement device 220 also comprises at least one response display 212 showing the results of the measurements, e.g., a single LCD or LED display that shows the text "XX = - 1" if the "Measure XX Observable" has been pressed and the central server has returned "-1" as the observable value corresponding to the qubit device 100. Alternatively, there could be as many small displays as there are buttons, each showing the result of the corresponding measurements.

Fig. 2D shows an example of a multi-qubit measurement device 230 which has a plurality of qubit receptacles 221 into which the corresponding number of qubit devices 100 can be placed. In this non-limiting example, we show an example of a qubit measurement device 230 with five qubit receptacles 221. The five qubit receptacles 221 have identification units 228, for example one at the bottom of each of the five qubit receptacles 221. The multi-qubit measurement device 230 further has a measurement activator 234, in the form of a button, switch, or icon, which is activated by pressing or switching and displays the value the observable defined by observable contribution selectors 233 associated with the qubit receptacles 221.

In some aspects, the observable contribution selectors 233 comprise a row of buttons, for example, OFF / X / Y / Z below each of the qubit receptacles 221. In one aspect, lights on the buttons could show which of the three buttons X, Y, Z is activated, if any. The student activates the components of the observable by pressing ones of these observable contribution selectors 233. This choice of representing the Pauli observables as 4 buttons OFF / X / Y / Z is not limiting of the invention. For example, the concept of the OFF button could be replaced by none of the letters X / Y / Z lighting up, or there could be a single button rotating through OFF -> X -> Y -> Z -> OFF shown on a display associated with the contribution selector.

An example will now be described of a possible lesson to teach the student about loss of one of the qubits in a quantum error correction, and how to recover from the loss of a qubit. Let us suppose that the student has five qubits: A red one, a blue one, a violet one, a green one, and a yellow one (note the colours 107 have no significance here, except to identity the individual qubit devices 100). The student has already performed several measurements on the five qubits. In order to reduce the probability of confusion, let us suppose that the student has always put the red qubit in the leftmost (first) receptacle, the blue qubit in the second, the violet qubit in the third, the green qubit in the fourth, and the yellow qubit in the fifth (rightmost).

For the part of the lesson during which the student learns how to deal with the loss of the violet qubit, the student measures observables where only the other qubits participate, but not the violet qubit. If the experiment is set up properly, from the results of the previous measurements and the measurements without the violet qubit, the student will be able to deduce how to put a new qubit, say, a magenta one (or a new violet one), in the place of the "lost" violet qubit, without loss of logical information.

One of the measurements that the student might be performing where the lost violet qubit does not participate is the measurement of the observable X_{blue} X_{green} Y_{yellow}, i.e., the blue and green qubits contribute with the Pauli-X, and the yellow qubit contributes with the Pauli-Y. To measure this observable, the student would insert the four qubit devices 100 in the multi-qubit measurement device 230 (as noted above): the red qubit in receptacle 1, the blue qubit in receptacle 2, the green qubit in receptacle 4, and the yellow qubit in receptacle 5. The student would then use the observable contribution selector 233 to select Off (receptacle 1), X (receptacle 2), Off (receptacle 3 - no qubit device 100), X (receptacle 4), Y (receptacle 5) for the contributions of the four qubit devices 100 and the empty qubit receptacle 3 (the lost violet qubit) to the observable and press the measurement activator 234.

The multi-qubit measurement device 230 will not perform the measurement (indicated, e.g., by the measurement activator 234 lighting up red instead of green) if X, Y, or Z is selected for a qubit receptacle 221 that does not hold one of the qubit devices 100 (in this non-limiting example receptacle 3). The resulting measurement value of the observable according to the calculation performed by the central server 10 will be shown on the response display 212. Additionally, the multi-qubit measurement device 230 might comprise a programming unit 236, which allows the user to store the observable defined by the observable contribution selectors 233 in the volatile or persistent memory of the digital processing unit 215 of the multi-qubit measurement device 230, and to retrieve stored observables from memory. In some implementations, the programming unit 236 could have a storage process activator 235 such as a button, switch, or icon, which on activation, by pressing or switching, is used to store the observable defined by the observable contribution selectors 233 in a way so that they can be later conveniently retrieved with a single action, e.g. by activating one of storage selectors 237, instead of having to use the observable contribution selectors 233 for each qubit receptacle 221.

The programming unit 236 comprise a plurality (nine in Fig. 2D, but this is not limiting of the invention) of storage selectors 237 and, optionally, a number of stored observable displays 239. The storage selector 237 can be thought of as representing a memory location where the observable is stored. The stored observable display 239 could, for example, be an LCD display. To store the observable described through the observable contribution selectors 233, the user presses the storage process activator 235 followed by the storage selector 237 to which the user wishes the observable to be assigned. From that moment on, the stored observable display 239 then displays the observable that was stored. For the example above, the stored observable display 239 to which the observable has been assigned, could show, for example on an LCD display, or example the characters "_ X _ X Y", where "_" represents a horizontal space to indicate an empty slot. To retrieve a stored observable, the user presses the corresponding storage selector 237, which restores the observable contribution selectors 233 to the observable displayed in the stored observable display 239.

It will be appreciated that this is of course only one non-limiting example to achieve implementation of the programming unit. An alternative would be to equip the multi-qubit measurement device 230 with a touch-screen display and use drag-and-drop functionality to drag the stored observable display 239 from the area of the touch-screen holding the observable contribution selectors 233 to a particular storage selector 237 for storage, and similarly, for retrieval, drag the stored observable display 239 from a storage selector to the area of the touch screen holding the observable contribution selectors 233 observable contribution area 233.

It will be also appreciated that the positioning of the plurality of receptacles 221 in a row, as opposed to two rows, or some other planar arrangement is not limiting of the invention. Similarly, not limiting of the invention is the configuration described in this aspect, in which one identification units 228 is used for each receptacle 221, or that the identification unit 228 is placed below the corresponding receptacle 221.

Fig. 2E shows a flip device 240 which has a single qubit receptacle 211 with an identification unit 218 which could be located inside in the flip device 240. The flip device 240 has a plurality of change activators 244 (e.g., in the form of buttons) for initiating changes in the qubit state of the qubit devices 100. For example, there could be two buttons, labelled "X-flip", "Y-flip", and "Z-flip", which apply a Pauli X-gate, a Pauli Y-gate, or Pauli Z-gate, respectively, to the qubit represented by the qubit device 100 in the qubit receptacle 211. There could also be H-flip, to affect a Hadamard gate, moreover, there could be half-flips, e.g., for the S-gate (phase gate, half of a Z-flip) or quarter flips, e.g., for the T-gate (half of an S-flip), or arbitrary fractions of flips, i.e., rotations.

It will be appreciated that the qubit entanglement device 220, the multi-qubit measurement device 230 and the flip device 240 all also have qubit readiness indicators 213, a digital processing unit 215, a communication unit 216, as well as a battery 217, and that the qubit receptacles 211 or 221 in these devices contains one of the afore-mentioned identification units 218 or 228, but these are not shown in the figures for simplicity.

It will further be appreciated that the implementation of qubits devices 100 being "inserted" into receptacles 211 or 221 is not limiting of the invention. The qubit devices 100 could be placed on a surface or held in the hands of students, while a user-interaction devices 200 could be brought into spatial proximity with the qubit devices 100. In this aspect, the receptacle 211 or receptacles 221 may not be visible, but they are still components of the user interaction devices 200. Moreover, while the measurement device 210, the entanglement device 220, the multi-qubit measurement device 230, and the flip device 240 have been described, for simplicity, as separate physical entities, it will be appreciated that two or more of these devices could instead be implemented within a single physical apparatus having multiple operational modes or software configurations. For example, such a device might comprise a more powerful digital processing unit 215, a communication unit 216, a power supply unit 217, an identification unit 218 or one or several identification units 228, and be equipped with a touch screen display where all or a subset of the qubit receptacles 211 or 221, the qubit readiness indicators 213, the response display 212, and the activators 214, 224, 234, 244, the observable contribution selectors 233, and the programming unit 236 are realized as interactive or informative display elements that are present or active on the touch screen display when the operational mode or software configuration corresponding to the respective user interaction device type 210, 220, 230, or 240 is active. In such embodiments, the single physical apparatus may be configured, or self-configure based on the numbers of qubits in proximity, to operate as any one or a combination of the measurement device 210, the entanglement device 220, the multi-qubit measurement device 230, or the flip device 240, sequentially or simultaneously.

The quantum training system 60 is designed to teach the users about quantum information and quantum information processing and the qubit devices 100 represent "qubits". As is known from quantum mechanics, the state of a qubit cannot be directly observed, and only measurement can reveal information about the qubit, but the measurement in general can also modify the state of the qubit itself, and, indeed, measurement of one qubit can change the global quantum state involving several entangled qubits. Similarly, the (global, emulated) quantum state of the qubit devices 100 cannot be directly observed by the students. To infer properties of the qubits, the students must use the qubit measurement devices 210, the multi-qubit measurement devices 230, or the entanglement devices 220, which also "perform" measurements. The students will learn that the properties can change through measurement. Through experiments, under supervision and with instruction, the students will learn the mechanisms by which the properties of qubits change based on measurements and flips, and the students will learn to predict the collective properties of a number of entangled qubits from the sequence of prior measurements and flips. This will enable the students to comprehend quantum information protocols that employ non-commuting observables or quantum entanglement, such as Quantum Key Distribution or Quantum Teleportation.

The central communication hardware 36 is configured to receive qubit device identity messages 110 from the user interaction devices 200. The qubit device identity messages 110 are read by the identification units 218 or 228 in a corresponding one of the qubit receptacles 211, 221 in one of the user interaction devices 200 and indicate the identity of the qubit device 100 in the corresponding qubit receptacles 211 or 221. The central communications hardware 36 transmits to the user interaction device 200 the result of the emulation of the measurement performed on the qubit devices 100 in the qubit receptacles 211 or 221.

The mass media memory 38 is configured to store data and processing instructions. The value of the individual ones of the qubit devices 100, e.g., whether the qubit devices 100 are located in one of the qubit receptacles 211 of a user interaction device 200 and which one of the qubit receptacles 211, is an example of the data stored in the mass media memory 38. As will be later explained, the mass media memory 38 will also store in a database a representation of the global quantum state of the plurality of the qubits (as represented by the qubit devices 100).

Fig. 2A shows an example of the qubit device 100. In one non-limiting example, the qubit device 100 is a rounded shaped in the form of a ball ovoid, ellipsoid, globular, or similar and can be considered to be representative of physical or logical elements, such as a "qubit" particle. The qubit devices 100 includes an identification device 105 storing a unique ID. This identification device interacts with the identification unit 218 in one of the user interaction devices 200 and identifies uniquely the qubit device 100, as explained above.

The operation of the qubit devices 100, the plurality of user interaction devices 200 and the central server 20 will now be described. It will be assumed that the quantum training system 60 is a system for teaching quantum technology and that the states of the qubit devices 100 represent quantum states. The central server 20 is in communication with the plurality of user interaction devices 200 and has details of the qubit devices 100 and the user interaction devices 200 in the mass media memory 38. This database includes the unique identity of the qubit devices 100 as well as, optionally, the locations of the qubit devices 100 in the user interaction devices 200. The database also includes a digital representation of the global quantum state of the qubits represented by the qubit devices 100. This digital representation could be, for example, a state vector representing the global quantum state of the qubits (which would be challenging for more than maybe 30 qubits).

Another digital representation of the global quantum state could comprise a list of generators of the stabilizer group of the quantum state, along with a +1 or -1 value for each generator in the list [see, Gottesman, Daniel. "Stabilizer Codes and Quantum Error Correction." PhD Thesis, California Institute of Technology, 1997]. This digital representation can efficiently represent so-called stabilizer quantum states: If *n* qubits represented by *n* ones of the qubit devices 100 are used, then *n* generators need to be maintained and updated, with every generator containing 2 bits for each of the *n* qubits, for example, the Pauli-Z-component and the Pauli-X-component of the contribution of the qubit to the generator; the sign requires one additional bit per generator. The digital representation could be shaped as a table or matrix of *n* rows, comprising the *n* generators, and 2*n*+1 columns, and will be stored in the mass media memory 38.

A method for efficiently updating the digital representation of the global quantum state of the qubits represented by the qubit devices 100 based on actions performed on the user interaction devices 200 is given, for example, in [Aaronson, S., & Gottesman, D. (2004). "Improved Simulation of Stabilizer Circuits". Physical Review A, 70(5), 052328]; an implementation powerful enough to process hundreds of qubits is described in [Gidney, Craig. "Stim: a fast stabilizer circuit simulator." Quantum 5 (2021): 497.]

If the emulation is based on stabilizer groups, the represented global quantum states of the qubit devices 100 are limited to stabilizer states, and the user interaction devices 200 must perform so-called Clifford operations, such as measurement of (multi-qubit) Pauli observables, performing Pauli-X,Y,Z gates, performing Hadamard, phase, CNOT, CZ, iSWAP gates and many more. In the context of education, the stabiliser states have a strong advantage, in that the mathematical requirements to deal with the stabiliser states are minimal. Indeed, in terms of algebra, only integer-number arithmetic is needed, in terms of probability, only fair coin tosses are needed, and no calculus is needed. At the same time, Clifford operations are the only ones used in a number of quantum information concepts and protocols, including non-commuting observables and the uncertainty principle, Bell states, some versions of quantum key distribution, quantum teleportation, and many others. This approach enables teaching quantum information in middle school in a meaningful way.

It will be appreciated that, basing the calculation of the quantum system on stabiliser groups, the emulation cannot process some gates, such as the T-gate or the Toffoli gate, and some measurements, such as single qubit measurements along vectors on the Bloch sphere that do not align with any of the three axes. Hence, for the benefit of the students with advanced mathematical background, including, for example trigonometry and non-trivial probabilities, the digital representation of the global quantum state can be made to be able to represent more general quantum states. This could be done, for example, by representing more general quantum states as linear combinations of the stabilizer states. This technique is used in algorithms for quantum emulation when the number of non-Clifford operations is small [for example: Bravyi, S., & Gosset, D. (2016). Improved Classical Simulation of Quantum Circuits Dominated by Clifford Gates. Physical Review Letters, 116(25), 250501.]. Alternatively, the digital representation of the global stabilizer state could be in the form of a ZX-diagram [Bob Coecke and Aleks Kissinger "Picturing Quantum Processes: A First Course in Quantum Theory and Diagrammatic Reasoning" Cambridge University Press (2017)], e.g., based on adjacency lists or another graph data structure. The important property of that representation is that the representation is of a size that grows polynomially in the number of qubits and number of user interactions, regardless of the type of user interactions (Clifford or not). For example, if up to a point in time *n* qubit devices 100 have been used and *m* interactions have been performed, then the size of the adjacency list representation would be bounded by *O(nm).* Hence, an efficient representation in the mass media memory 38 is possible. The updates based on the users' interactions with the qubit devices 100 and user interaction devices 200 could then be processed by applying ZX-calculus rules, as is demonstrated, e.g., in the software package PyZX [https://github.com/zxcalc/pyzx].

When a user performs an action that requires a response, e.g., requests a measurement by pressing the measurement activator 214, 224, or 234 on one of the user interaction devices 210, 220, or 230, the ZX-diagram is first updated, and then reduced, based on ZX-calculus rules, until the probabilities defining the value of transmitted to the user is known. The reduction step requires exploring a search space of possible ZX-calculus rules. To handle the complexity involved in exploring that search space, the ZX-diagram can be simplified by applying ZX-calculus rules pre-emptively, before a measurement result is requested from a user interaction device 200. This allows low latency emulation for many student experiments that require non-Clifford angles, e.g., Bell test and Eckert-91 Quantum Key Distribution.

In the following description, it will be assumed that the global quantum state is represented by a list of generators of the stabilizer group.

Fig. 3 shows an example of how the system 10 can be used to teach quantum technology using the plurality of the qubit devices 100. The following description will focus on measurement of a single one of the qubit devices 100, but it will be appreciated that the system 10 includes more than one qubit device 100 which may or may not interact with each other, as the description will outline. Theoretically, the system 10 may have numerous qubit devices 100. However, in practice there will be between 10 and 1,000 qubit devices 100 in the system, depending on the number of students in the class.

In a first step S300 one or more of the qubit devices 100 are inserted into the qubit receptacle 211 of the qubit measurement device 210 and in step S305 an identification process begins with the identification unit 218 communicating with the identification device 105 in the qubit device 100 to determine the unique identity of the qubit device 100 in the qubit receptacle 211. Optionally, the unique identity is transmitted immediately in step S310 to the central server 20 as a qubit device transmit message 110 from the communication unit 216. Alternatively, the unique identity is only transmitted in step S320 as part of the query. The central server 20 may respond with an error message, e.g., if mischievous students have managed to duplicate the unique identities of qubit devices 100; otherwise, the central server 20 will respond with a confirmation signal in step S312 and the qubit readiness indicator 213 indicates that the qubit device 100 is ready to be measured. It will be appreciated that, at this stage, no value is indicated on the response display 212 of the qubit measurement device 210.

One of the measurement activators 214 of the qubit measurement device 210 is then pushed in step S315 by one of the students. The response display 212 indicates to the students that the measurement is in progress, and a query is sent in step S320 as a qubit device transmit message 110 from the communication unit 216 to the central server 20. The transmit message 110 will typically comprise the unique identity of the qubit device 100 involved and the action taken on the qubit device 100, e.g., measuring the X observable for the single qubit measurement device 210.

More generally, for user interaction devices 100 that request a measurement, including for example, the measurement devices 210, the entanglement devices 220, the multi-qubit measurement devices 230, the action contained in the transmit message 110 will comprise the observable whose measurement is requested using the query of step S320, e.g., in the form of a list of qubit identities and their respective contributions to the observable. In this non-limiting example, the contribution could be one of the Pauli operators X, Y, or Z. For example, if qubit devices 100 with identities *ID*₁ and *ID*₂ have been placed in the receptacles of the entanglement device 220, and the measurement of the YY-observable has been requested in step S320, then the action contained in the transmit message 110 would contain the information "*ID*₁ ↦ Y, *ID*₂ ↦ Y".

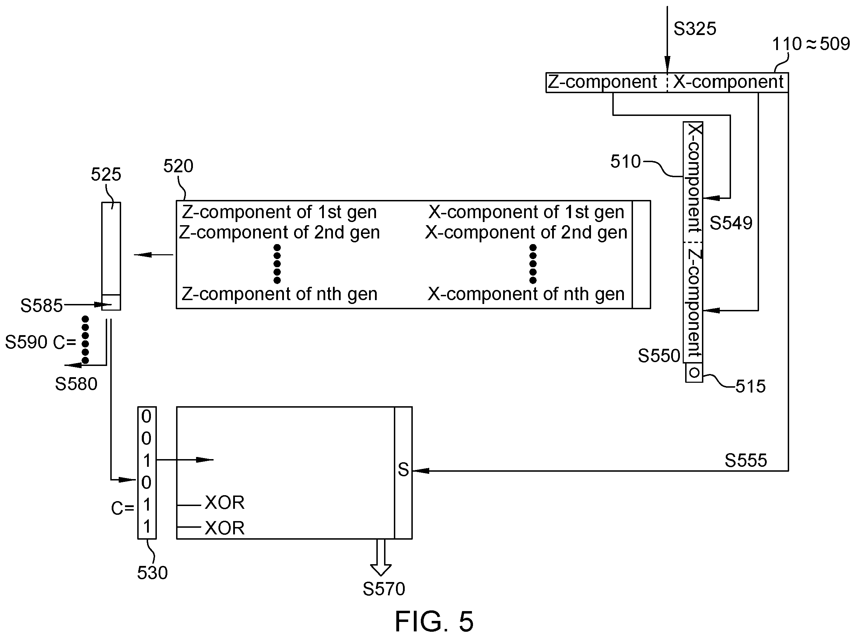

The central server 20 receives the query from the qubit device transmit measurement in step S325 and in an experimentation step S330 performs an emulation to determine the quantum states of the complete system 10 with all of the qubit devices 100 in the quantum training system 60. In this step S330 shown in Fig. 5, the central processor 32 updates a matrix representation of the global quantum state stored in the mass media memory 38 by performing the calculation of the quantum states required to determine for the measurement.

In the case of the stabilizer representation of the global quantum state in the form of a matrix (as explained above), the measured observable described in the action contained in the transmit message 110 is a row vector 509 and is transposed in step S549 into a column vector 510 of length 2*n*+1 of *n* Pauli-X-components and *n* Pauli-Z-components, but no sign yet, i.e., a sign bit 515 is set to 0 for now. Note the swapping of Z and X components in the column vector 510 from the row vector 509. A matrix 520 whose rows represent the generators is then multiplied in step S550 to this column vector 510 and outputs a column vector 525 of length n. The resulting column vector 525 may contain only zeros or may have one or more rows with entries that are non-zeros.

A non-zero entry in one of the rows of the column vector 525 indicates that the corresponding generator in the matrix 520 anti-commutes with the measured observable (i.e. column vector 510), and the outcome of the measurement is +1 with probability ½ and -1 with probability ½. In the example of Fig. 5, it will be seen that in the simple column vector 525 there are non-zero entries in rows three, five and six. The measured observable (from the column vector 510), with a random sign bit, replaces in the result vector 530 in step S555 one of these anti-commuting generators (with Z- and X- components the same order as the other rows, not as in the column vector). In the example of Fig. 5, it is row three which is replaced in step S555, but this is not limiting of the invention. The removed row (i.e. row 3 in Fig. 5) is added (modulo 2, i.e., XOR in every entry) in step S560 to the other rows with a non-zero entry in the result vector 530 (i.e. rows five and six in Fig. 5). The sign bit of the new row (i.e. row three) is turned randomly into a +1/-1. In this way, the representation of the global quantum state in the mass media will be updated, and the result of the measurement obtained in step S570.

If none of the generators anti-commutes with the measured observable, a row vector is generated in step S580 from the measured observable represented in the column vector 510, but with sign bit left open. This row vector of length 2n of Z- and X-components can be expressed as the sum (modulo 2, i.e., XOR in every entry) of a subset of the Z- and X-components of the rows in the matrix. Adding up the sign bits (modulo 2, i.e., XOR-ing) of the rows participating in the subset gives then the sign bit corresponding to the row vector of the observable in step S585. In this case, representation of the global quantum state is left unchanged, and the result of the measurement is obtained in step S590.

It will be appreciated that the educator 40 may choose different quantum experiments in an experimentation step S330 to introduce the students to different concepts in quantum technology. These experiments are associated with corresponding updates in the global quantum state while, in case of measurements, also retrieving the measurement result.

After running the quantum experimentation step S330, the measurement result, a numerical value, is sent to the qubit device 100 in step S335 from the central server 20 to the measurement unit 200 as a qubit device receive message 120. The digital processing unit 215 in the qubit measurement device informs the user in step S340 on the response display 212 of the result of the measurement, i.e., the measurement value. The student may now repeat the measurement of the same observable or perform a measurement of one of the other observables on the same qubit, which amounts to repeating the steps above.

Ultimately, the student will remove the qubit device 100 from the qubit receptacle 211 in step S345. Again optionally, the server will be informed of the removal of the qubit device 100 from the user interaction device 200 in a message S350. The chosen observable of the qubit represented by the qubit device 100 has now been measured. In the case when the qubit represented by the qubit device 100 had been entangled with other qubits, future measurement of these other qubits may depend on the result of this measurement.

We shall now describe how qubits represented by qubit devices 100 can be entangled.

The concept of entanglement can be taught using the method shown in Fig. 4. In a first step S400, two of the qubit devices 100 are inserted into the two qubit receptacles 221 of the qubit entanglement device 220. The qubit devices 100 are identified in step S405 using the identification unit 228 and the identities of both of the two qubit devices 100 are sent to the central server 20 in the qubit device transmit messages 110 in step S410. The student will then be taught in step S415 to entangle the two qubit devices 100 by performing one or several entangling measurements by pressing the corresponding measurement activators 224 on the qubit entanglement device 220. The instruction to perform the requested measurement of the two qubit devices 100 is sent in step S420 as the qubit device transmit message 110 to the central server 20 which then receives the instruction in step S423.

The central server 20 processes the measurement in step S425 by updating the global quantum state of the active qubits in the mass media memory 38 in the same way as described above, just with a different observable, and the measurement result is also obtained in the way described above. The result of the measurement, as a numerical value, is sent in step S426 to the entanglement device 220 and is indicated to the user on the response display 212 in step S428. The student may choose to repeat the measurement of the chosen observable or measure one of the other observables. For example, one of the four Bell states can be prepared on the two qubits represented by the qubit devices 100 in the qubit entanglement device 220 by measuring any two of the three observables XX, YY, ZZ.

Ultimately, one or both of the two qubit devices 100 are removed in step S430 from the qubit receptacles 221. One or both of the two qubit devices 100 could then be placed in step S435 into the qubit receptacle 211 of the qubit measurement 200 where the measurement is performed as step S440 according to the method set out in Fig. 3.

The student can observe the measurement result values of the measurements performed using the qubit devices 100 in step S445. The quantum experimentation step S335 will take into account the entanglement of the two qubit devices 100 and thus the value of the other (second) of the qubit devices 100 measured in a step S450 will depend on the observed value of the qubit device 100 measured in step S445. For example, suppose that in step S415 when measuring the ZZ-observable, the student has received the measurement result +1. If the student then measures the Z-observables of both of the qubit devices 100 either sequentially in any order in the qubit measurement device 210 or simultaneously in two of the qubit measurement devices 210, the two measurement results for the individual ones of the qubits will be equal. The students can repeat the method of Fig. 4 several times to observe this dependency and thus understand the concept of quantum entanglement.

It will be appreciated that the two qubit measurement devices 210 with the qubit devices 100 do not need to be immediately adjacent to each other. The two qubit measurement devices 210 could be located a distance apart, in different rooms, or even at a great distance, as long as the two qubit devices 100 remain in contact with the central server 20 to have their values updated in the mass media 28.

Similarly, the flip device 240 can be used to apply a bit-flip (Pauli X-gate) or phase flip (Pauli Z-gate) to the qubit represented by a qubit device 100 by inserting the qubit device 100 into the qubit receptacle 211 of the flip device where the qubit device 100 is identified, and its identity sent to the central server 20 as discussed above in steps S410-S425.

The student can then perform a bit-flip or phase-flip on the qubit represented by the qubit device 100 by using the change activators 244 of the flip device 240. The instruction to apply the chosen gate is sent in step S420 to the central server 20 where the global quantum state is updated in the mass media 38 in step S425. In the case where the global quantum state is represented as a list of generators of the stabilizer group, this update happens by flipping the sign bit of the rows corresponding to the generators which anti-commute with the chosen Pauli gate (see above for the details), while leaving intact the values of the generators that commute with the Pauli gate.

The multi-qubit measurement device 230 can be used like the single qubit measurement device 210, but for measuring more complex observables than single-qubit Pauli observables in the measurement device 210, or two qubit observables restricted to the choices ZZ, XX, YY in the entanglement device 220. The multi-qubit measurement device 230 is programmable, i.e., all possible Pauli-observables on up to a plurality, say, five, qubits can be measured conveniently. This programmability allows the student to verify more their understanding of how the properties of the qubits change with measurements and flips.

Measuring the general 5-qubit Pauli observables can be done by selecting, for each qubit receptacle 221 of the multi-qubit measurement device 230, in the selector 233, corresponding to the qubit receptacle 221 of the multi-qubit measurement device 230, one of the three Pauli operators X, Y and Z, or selecting the option "off". The "off" option means that the qubit device 100 in the corresponding qubit receptacle 221 (and representing one of the qubits) will not participate in that particular observable. The measurement is triggered by pressing the measurement activator 234. The information about the observable and the unique identities of the involved qubit devices 100 are transmitted to the central server 20, which will update the global quantum state as explained above and return to the multi-qubit measurement device 230 a measurement result, which is shown in the response display 212. To conveniently perform repeated measurements of a certain collection of complex Pauli observables, the observable chosen using the selector(s) 233 can be stored in one of a plurality of storage selectors 237 for easy retrieval: Pressing one of the storage selectors 237 holding a stored assignment of Pauli operators to the five qubits will restore the operators to the selectors 233, highlighting the chosen operators or the "off" option.

This programmability facilitates experiments with quantum error correction. For example, it allows the student to understand how to protect quantum information against losing one of four qubits by means of the 4-qubit code, or against an arbitrary flip (bit-flip, phase-flip, or Y-flip) by means of the 5-qubit code. For that, the student will be instructed to program the generators of the quantum error correcting code on the programmable buttons, along with the logical Z, X, and Y observables. The students will be able to work out by themselves what corrections will be necessary if the qubits are lost / flipped. Larger codes could be taught with a multi-qubit measurement device 230 containing more than 5 qubit receptacles 221 and correspondingly identification units 228 that can handle the larger number of qubit devices 100 to be identified.

Experiments with qubits are thus synthesised using the quantum training system 60 with the qubit devices 100. If the global quantum state of the active qubits is represented based on the stabilizer formalism, these experiments are limited to the use of so-called *Clifford operations.* While experiments with universal quantum computation is not achievable in this manner, Bell states, quantum key distribution with and without entanglement, quantum teleportation, super-dense coding, entanglement swapping, and quantum error correcting codes are achievable, along with other basic protocols. To create experiments that involve universal quantum computing, e.g., non-Clifford operations, the global quantum state could be represented by a state-vector, by a ZX-diagram, or by a linear combination of stabilizer states, as described above. Updating the quantum state and retrieving measurement results would then be performed in the respective way for these representations, as described above.

The quantum training system 60 disclosed in this document includes a computer-implemented method to represent the global quantum state, which could be based on a digital representation as described above, or a quantum representation, i.e., a quantum computer. This disclosure is not restricted to any particular choice of the representation and experimentation methods, and also not to the location of the quantum training system 60. The quantum training system 60 could be hosted physically inside of the central server 20, or it could be called upon via remote computation, e.g., by means of *Remote Procedure Calls,* (RPC or gRPC), i.e., the quantum training system 60 could be hosted "in the cloud".

In a further aspect of the invention, the central processor 60 can be replaced by servers in the cloud and indeed one of these servers could include a connection to a real quantum computer.

### REFERENCE NUMERALS

- 10: Computer-implemented system
- 20: Central server
- 22: Application program layer
- 24: Operating system layer
- 30: Hardware layer
- 32: Central processor
- 34: Central user-input hardware
- 36: Central communication hardware
- 38: Mass media memory
- 40: Educator
- 45: Educator inputs
- 60: (Quantum) training system
- 100: Qubit device
- 105: RFID tag
- 106: Barcode or QR code
- 107: Colour
- 110: Qubit device transmit message
- 120: Qubit device receive messages
- 200: User interaction devices
- 210: Qubit measurement device
- 211: Qubit receptacle
- 212: Response display
- 213: Qubit readiness indicator
- 214: Measurement activator
- 215: Digital processing unit
- 216: Communication unit
- 217: Battery
- 218: Identification unit
- 220: Qubit entanglement device
- 221: Qubit receptacle
- 224: Measurement activator
- 228: Identification unit
- 230: Multi-qubit measurement device
- 233: Observable contribution selector
- 234: Measurement activator
- 236: Programming unit
- 239: Stored observable display
- 240: Flip device
- 244: Change activators
- 509: Row vector
- 510: Column vector
- 515: Sign bit
- 520: Matrix
- 525: Column vector
- 530: Result vector

## Claims

1. A computer-implemented system (10) for managing a training system (60), the system (10) comprising a central server (20), wherein the central server (20) has:
(a) a hardware layer (30) with a central processor (32), central user-input hardware (34) configured to receive educator inputs (45) from an educator (40), central communication hardware (36) configured to receive qubit device transmit messages (110) and to transmit qubit device receive messages (120) to a plurality of user interactions devices (200), and a mass media memory (38) configured to store data and processing instructions;
(b) an application program layer (22) running the educational system (60); and
(c) an operating system layer (24) configured to receive the educator inputs (45), and the qubit device transmit messages (110) and to pass ones of the received educator inputs (45) and the received qubit device transmit messages (110) to the educational system (60).

2. The system (10) of claim 1, further comprising a plurality of user interaction devices (200) comprising:
one or more qubit receptacles (211, 221, 231, 241) for receiving a qubit device (100); and
one or more identification units (218) for identifying the qubit device (100) in the qubit receptacles (211, 221, 231, 241).

3. The system of claim 2, wherein the user interaction devices (200) comprise a communication unit (216) configured to transmit qubit device transmit messages (110) to the central server (20) and to receive qubit device receive messages (120) from the central server (20).

4. The system (10) of claim 2 or 3, wherein the plurality of the user interaction devices (200) comprises further at least one of response displays (212) or measurement activators (214, 224, 234, 244).

5. The system (10) of claim 4, wherein at least one of the response displays (212) displays a value calculated by a quantum emulation running (S330) in the central server (20).

6. The system (10) of any of the above claims, wherein the mass medium (28) stores details of relationships between ones of the qubit devices (100).

7. A method for managing a training system (60) comprising:
- inserting (S300) at least one qubit device (100) into a qubit receptacle (211) of one of a plurality of user interaction devices (200);
- identifying (S305) the qubit device (100);
- transmitting (S310) the identity of the qubit device (100) and (S320) a query to a central server (20);
- running (S330) a quantum emulation based on the query;
- sending (S335) results of the quantum emulation to the user interaction device (200); and
- displaying (S540) an observable of the inserted at least one qubit device (100) calculated by the quantum emulation (S330).

8. The method of claim 7, wherein the query is indicative of an action taken on one or more of the at least one qubit devices 100.

9. The method of claim 7 or 8, wherein the action is one of a measurement of an observable, an entanglement of one or more of the at least one qubit device (100), a bit flip of one or more of the at least one qubit (100), or a phase flip of one or more of the at least one qubit device (100).
